Europäisches Patentamt

European Patent Office

Office européen des brevets

(11) Publication number: **0 085 233**
**A1**

## (12) EUROPEAN PATENT APPLICATION

(21) Application number: **82306369.8**

(22) Date of filing: **30.11.82**

(51) Int. Cl.³: **F 16 D 65/56**

(30) Priority: **05.01.82 GB 8200208**

(43) Date of publication of application:
**10.08.83 Bulletin 83/32**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Haines, William Ernest**
**39 St. Mary's Close**
**Southam Warwickshire(GB)**

(74) Representative: **Farrow, Robert Michael**
**Patent Department Automotive Products plc Tachbrook Road**
**Leamington Spa Warwickshire CV31 3ER(GB)**

(54) **Drum brake having automatic wear adjuster.**

(57) An internal shoe drum brake has a hydraulic cylinder at one end of the brake shoes (14, 15) and an automatic adjuster mechanism (23, 25, 26) mounted at the other end of the brake shoes. The adjuster is actuated by a cable (32) guided on the brake shoe (15) and effectively anchored relative to the brake shoe (14) on a stepped abutment (38).

The preferred embodiment has the stepped abutment provided on a handbrake strut (21).

FIG. 2.

EP 0 085 233 A1

0085233

"Drum Brake having
Automatic Wear Adjuster"

This invention relates to drum brakes particularly though not exclusively for motor vehicles.

Such drum brakes frequently incorporate automatic wear adjusters which are normally actuated on operation of the service brake, and/or handbrake if provided, to maintain a constant clearance between the brake shoes and the brake drum as the friction material of the brake shoes wear.

One problem with small diameter drum brakes is that it is very difficult to have the brake mechanism in the annular area between the brake drum and wheel hub and also provide an automatic wear adjuster. A subsidiary problem is to provide an adjuster which is cheap, light and readily adaptable to differing wheel hub designs whilst being also responsive to the wear of both brake shoes and able to adjust both brake shoes as wear occurs. It is also desirable that the brake be of straight forward construction, i.e. leading and trailing shoe design, rather than the more complicated constructions, i.e. duo-servo design, that have been hitherto proposed in, for example, British Patent 779,889.

Our British Patent Application No. 81 19699 discloses an automatic wear adjuster which overcomes the aforementioned problems and satisfies the stated design requirements.

According to that invention there is provided an internal shoe drum brake having a pair of brake shoes, brake actuating means between the shoes at one pair of adjacent shoe ends and a variable length strut between the shoes at the other pair of adjacent shoe ends, said variable length strut including step by step means to adjust the length of said strut in response to adjuster actuating means pivoted on one brake shoe and operable against a resilient bias to link means attached to the adjuster actuating means at one operative end, guided on said one brake shoe and attached at the other operative end to said other brake shoe. The link means are shown in the preferred embodiment as a fixed length cable acting between fixed abutments.

One problem with such an arrangement is that no adjustment is provided to accommodate cables of slightly different length.

The present invention provides an internal shoe drum brake having a pair of brake shoes, first brake actuating means between the shoes at one pair of adjacent shoe ends and a variable length strut between the shoes at the other pair of adjacent shoe ends, said variable length strut including step by step means to adjust the length of the strut in response to adjuster actuating means pivoted on one brake shoe and operable against a resilient bias to link means attached to the adjuster actuating means at one end, guided on said one brake shoe and effectively attached at the other end to said other brake shoe, characterised thereby that said other end of the link means is anchored on one of a plurality of steps of a single abutment, each step providing an alternative anchor dependent on the operative length of the link means.

Other features of the invention are disclosed in the following description of a preferred embodiment shown, by way of example only, in the accompanying drawings in which:-

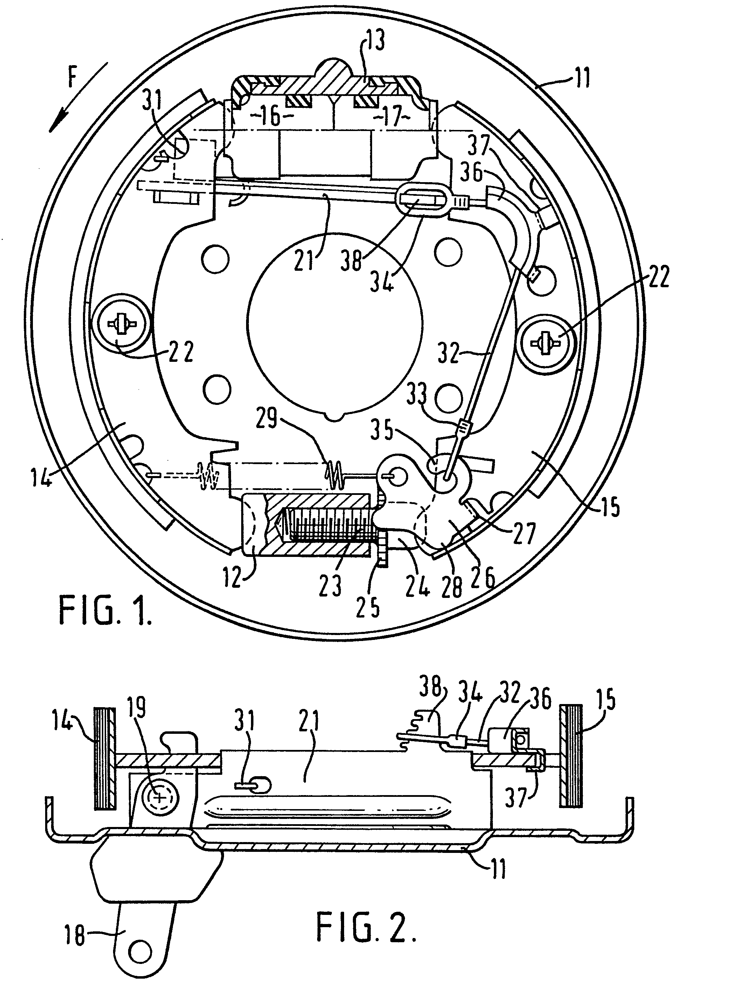

Fig. 1 is a part sectional plan view of a leading/trailing shoe drum brake incorporating the invention; and

Fig. 2 is a transverse section through the brake of Fig. 1 on the line Y-Y.

With reference to the drawings there is shown a leading/trailing shoe drum brake having the usual back plate 11, fixed abutment 12, fixed double ended hydraulic cylinder 13 and brake shoes 14,15 between the abutment and cylinder.

The hydraulic cylinder, shown part sectioned for clarity, has two pistons 16,17 each of which is responsive to hydraulic fluid under pressure to urge a respective brake shoe against a brake drum (not shown).

In the direction of forwards rotation, indicated by the arrow F, shoe 14 is the leading shoe and shoe 15 the trailing shoe.

Mechanical actuation of the brake shoes, for a handbrake, is provided by a lever 18 pivoted by pin 19 on a strut 21 extending between the brake shoes 14 and 15. A rightwards pull on the free end of the lever 18 (as viewed) will urge the shoes 14,15 against the brake drum to apply the brake.

The brake shoes 14,15 are retained against the backplate 11 by the usual shoe steady posts 22.

As described so far, the brake is a conventional leading/trailing shoe drum brake.

Between the fixed abutment 12 and the adjacent end of the shoe 15 is a strut 23 screw-threaded in the body of the abutment 12. The shoe end is located in a slot of a sleeve 24 which is mounted for relative rotation on the strut outer end, as shown in dotted outline. A pawl wheel 25 is formed on the strut 23 to effect rotation thereof.

A pecker 26 is pivotally mounted on the brake shoe 15 by a tag 27 extending through a hole in the shoe. The pecker has a tooth for engagement with the pawl wheel 25 and includes an abutment 28 for co-operation with the table of the shoe 15 and towards which it is biassed by a return spring 29.

The strut 21 is biassed against the shoe 14 by a/spring 31 which is much stronger than the return spring 29.

A cable 32, having an attachment ring 33,34 crimped on each end, extends from a hook 35 of the pecker 26, through a guide member 36 mounted on the shoe 15 by tags  37, to an upstanding lug 38 of the strut 21.

The lug 38 is stepped as shown so that the cable length may be adjusted to bring the pecker 26 to the optimum position on the pawl wheel 25.  Each step is formed as a hook to positively retain the cable end.

The return springs 29,31 and cable 32 co-operate to bias the shoes to the return position.

In operation actuation of the hydraulic cylinder 13 will urge the shoes 14,15 apart, the strut 21 will move with the shoe 14 by virtue of the spring 31 and lift off shoe 15.  The strut consequently pulls on the cable 32 to draw the pecker 26 across the pawl wheel 25.  As the brake is released the pecker will engage a tooth of the pawl wheel 25 to rotate the strut 23 and increase the effective distance between the abutment ends of the shoes 14,15.  As the brake shoe linings wear the pecker 26 will incrementally rotate the pawl wheel 25 to maintain a substantially constant running clearance for the brake shoes.

For service braking the adjuster is responsive to wear of both brake shoes since the cable 31 is effectively anchored on the shoe 14 and guided on the shoe 15. Both shoes are adjusted by virtue of the pistons 16,17 sliding in the bore of the cylinder 13 to centre the shoes with respect to the drum. As the brake shoe linings wear the pistons 16,17 will be moved slightly from right to left as viewed.

Mechanical actuation of the brake urges the shoe 14 and strut 21 apart, consequently the strut 21 stays in contact with shoe 15 and the cable length remains fixed, the adjuster cannot operate.

In an alternative embodiment the cable 31 may be replaced by wire rods acting between the lug 38 and pecker 26 via a bellcrank mounted on the shoe 15 in place of the guide member 36. Furthermore the pecker 26 may act to rotate the pawl wheel 25 on the 'ON' stroke of the brake rather than the 'OFF' stroke by providing reversed pawl teeth in a known manner.

It will be realised that the 'run' of the cable 31 may be readily changed to suit differing wheel hub designs and that the stroke of the pecker 26 may be changed by altering its lever ratio. Since the pecker and guide member 36 are preferably pressed from sheet metal such changes would be very economically made.

Further spring means may be provided between the shoes to increase the return bias on the shoes. Such means must be chosen so as not to interfere with the relationship between springs 29 and 31.

A small clearance is provided between the abutment 28 and the shoe table to keep the cable 32 taut.

The adjuster may be made operable on the handbrake as well as service brake by anchoring the cable 32 effectively on the brake shoe 14.

The protruding end of the handbrake lever 18 may be stepped in the manner of the lug 38 or a stepped rivet may be attached to the brake shoe to serve as anchor.

## Claims

1.      An internal shoe drum brake having two brake shoes (14,15), first brake actuating means (13) between the shoes at one pair of adjacent shoe ends and a variable length strut (12,23) between the shoes at the other pair of adjacent shoe ends, said variable length strut including step by step means (25) to adjust the length of the strut in response to adjuster actuating means (26) pivoted on one brake shoe and operable against a resilient bias (29) by link means attached to the adjuster actuating means (26) at one end, guided on said one brake shoe and effectively attached at the other end to said other brake shoe, characterised thereby that said other end of the link means is anchored on one of a plurality of steps of a single abutment (38), each step providing an alternative anchor dependent on the operative length of the link means.

2.      A drum brake according to Claim 1, characterised thereby that the link means comprises a cable (32).

3. A drum brake according to Claim 1 or Claim 2, characterised thereby that a strut (21) is provided between the brake shoes as second brake actuating means, a spring (31) holding the strut (21) against said other brake shoe for operation of the first brake actuating means (13) and said abutment (38) being provided on said strut (21).

4. A drum brake according to any preceding Claim, characterised thereby that each step of said abutment (38) is formed as a hook to restrain the cable.

5. A drum brake according to any preceding Claim, characterised thereby that said resilient bias (29) provides also the return bias for the brake shoes (14,15).

FIG. 1.

FIG. 2.

European Patent
Office

**EUROPEAN SEARCH REPORT**

Application number

EP 82 30 6369

## DOCUMENTS CONSIDERED TO BE RELEVANT

| Category | Citation of document with indication, where appropriate, of relevant passages | Relevant to claim |
|---|---|---|
| A | US-A-3 799 295 (HILL)<br>* Column 1, line 64 - column 2, line 5 ; figure * | 1,2,4 |
| A | GB-A- 833 729 (BENDIX)<br>* Page 2, lines 126-128 ; page 4, lines 22-37 ; figures 1, 7 * | 1,2 |
| A | US-A-3 807 536 (NEWSTEAD et al.) | |
| D,A | GB-A- 779 889 (BENDIX) | |

**CLASSIFICATION OF THE APPLICATION (Int. Cl. 3)**

F 16 D 65/56

**TECHNICAL FIELDS SEARCHED (Int. Cl. 3)**

F 16 D 65/00

The present search report has been drawn up for all claims

| Place of search | Date of completion of the search | Examiner |
|---|---|---|
| BERLIN | 22-03-1983 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82